# EUROPEAN PATENT SPECIFICATION

(11) **EP 2 186 701 B1**
(45) Date of publication and mention of the grant of the patent: **15.02.2012**
(21) Application number: 08792410.6
(22) Date of filing: 12.08.2008
(51) Int. Cl.: B60W 10/02, B60W 10/04, B60W 30/00, B60K 20/00, B60K 20/06, B60R 25/00, B60R 25/04, F02D 41/04, B60W 30/18

(54) **VEHICLE START AUXILIARY SYSTEM**
FAHRZEUGSTARTHILFSSYSTEM
SYSTEME AUXILIAIRE DE DEMARRAGE DE VEHICULE

(30) Priority: 26.09.2007 JP 2007249815
(43) Date of publication of application: 19.05.2010
(73) Proprietor: Honda Motor Co., Ltd., Minato-ku Tokyo 107-8556 (JP)
(72) Inventor: YAMAKOSHI, Kunio, Wako-shi Saitama 351-0193 (JP)
(74) Representative: Prechtel, Jörg
(86) International application number: PCT/JP2008/064477
(87) International publication number: WO 2009/041177

(56) References cited:
- EP-A2- 1 332 934
- EP-A2- 1 564 055
- DE-A1- 10 218 348
- DE-A1- 10 305 297
- DE-A1-102005 035 302
- DE-A1-102005 035 303
- DE-A1-102005 052 492
- DE-C1- 19 653 855
- GB-A- 2 353 835
- GB-A- 2 359 118
- JP-A- 9 287 488
- JP-A- 61 247 523
- JP-A- 2000 255 351
- JP-A- 2006 123 853
- JP-A- 2007 118 759
- JP-A- 2007 118 759
- US-A1- 2003 022 755

## Description

### Technical Field

The present invention relates to a start assistant system of a motor vehicle which performs the assistance of the start of the motor vehicle based on of a release operation of an operational unit as an instruction.

### Background Art

As a power control technique at the time of starting a motor vehicle, there is proposed a launch control in which a clutch for connecting and disconnecting the power between an engine and a transmission mechanism is automatically controlled according to a throttle opening degree and an engine rotational speed so as to suppress wheel spin (For example, see Patent Citation 1 and 2).

As a start assistant system of a motor vehicle using the launch control, it is proposed that a motor vehicle is started based on a start instruction of an operation release of a shift lever. After a mode conversion switch is switched to a sudden start mode, an accelerator pedal is stepped on a state in which a shift lever (operational unit) transverse to a driver's seat is shifted to a down shift side, and when the shift lever operation is released from that state, the motor vehicle is started based on a start instruction of the operation release.

In the start assistant system, after the mode conversion switch is switched to the sudden start mode, if the accelerator pedal is stepped on a state in which the shift lever is in down shift, the engine is maintained at a rotational speed capable of generating maximum torque, and at the same time, the clutch is slipped and controlled so as to generate maximum preload. When the operation of the shift lever is released from that state, the clutch is controlled so that the maximum torque of the engine can be transmitted to the wheels without causing wheel spin.
[Patent Citation 1] JP-A-2000-145832

A start assistant system with a "launch control" mode for a motor vehicle that allows to start the motor vehicle to move in a race start mode is disclosed in DE 103 05 297 A1, considered as the closest prior art. The launch-control mode is selected by performing a sequential process, as follows: in the stationary vehicle the slip control system is deactivated, a special drive program is selected, a selector lever is pushed and the accelerator pedal is full depressed. Upon releasing the selector lever, the vehicle is started.

A similar "launch control" is disclosed in DE 10 2005 035303 A1, with the additional features that paddles are operated at the same time with stepping on the accelerator pedal, in order to start the vehicle. The racing start mode is aborted when the paddles are released.

DE 10 2005 035302 A1 considers also a "launch control" mode similar to the one described above. In particular a racing start is described, which requires certain operating elements to be operated before beginning the racing start, to set a given preconfigured mode, such as a "sport drive". Switching paddles on the steering wheel can be depressed at the beginning of the racing start, or kept depressed during the racing start.

A start-stop device for a motor vehicle with an automatic transmission is disclosed by DE 102 13 348 A1. The device allows to start and stop the vehicle when certain conditions occur, without necessitating the driver to operate an additional start/stop-button. In particular the start-stop device starts the vehicle automatically when the acceleration pedal is depressed.

JP 2007 118759 A discloses transmission controlling means, which carry out range changeover of a transmission, according to the combination of a right paddle switch and a left paddle switch.

### Disclosure of Invention

### Technical Problem

However, the start assistant system of related art compels the driver to bustle to operate at the time of starting the motor vehicle. This is due to the fact that a real connection control of the clutch begins based on the start instruction of the operation release of the shift lever transverse to the driver's seat, so that just up until the sudden start of the motor vehicle, the driver is required to put one hand on the shift lever.

Thus, the present invention provides a start assistant system of a motor vehicle which allows a driver to perform a start operation without having to release their hands from a steering wheel and which is capable of promoting an improvement in a driving operability.

### Technical Solution

A start assistant system of a motor vehicle of the present invention to solve the above-described problem is a start assistant system of a motor vehicle according to claim 1.
According to the start assistant system of the motor vehicle, the driver operates an up side paddle shift and a down side paddle shift simultaneously with the fingertips of both hands while gripping the steering wheel with both hands at the time of starting, and at the same time steps on the accelerator pedal, and by subsequently releasing the operation of the both paddle shifts from that state, it is possible to start the motor vehicle.

In the start assistant system of the motor vehicle, by controlling the clutch, which is disposed between the engine and the speed changing device and operates the power connection and disconnection of the engine and the speed changing device, depending on either the throttle opening degrees or the engine revolutions, wheel spin may be suppressed.

In the start assistant system of the motor vehicle, after a mode conversion switch for switching a driving mode is switched to select a sudden start mode, the sudden start mode may be cancelled when the operational unit is not operated simultaneously for more than a predetermined time within a regulated time.

### Advantageous Effects

According to the start assistant system of the motor vehicle, since the operation release after the simultaneous operation of the up side paddle and the down side paddle, which are installed in the steering wheel, is used as a start instruction, the driver can perform the start operation without having to release both hands from the steering wheel and the driving operability at the time of start is improved.

### Brief Description of Drawings

[FIG. 1] FIG. 1 is a schematic diagram showing a start assistant system of one embodiment of the present invention.
[FIG. 2] FIG. 2 is a flowchart showing the flow of the control of the start assistant system.

### Explanation of Reference

- 1:: ENGINE
- 3:: SPEED CHANGING DEVICE
- 4:: CLUTCH
- 8:: STEERING WHEEL
- 9A:: DOWN SIDE PADDLE
- 9B:: UP SIDE PADDLE
- 14:: MODE CONVERSION SWITCH

### Best Mode for Carrying out the Invention

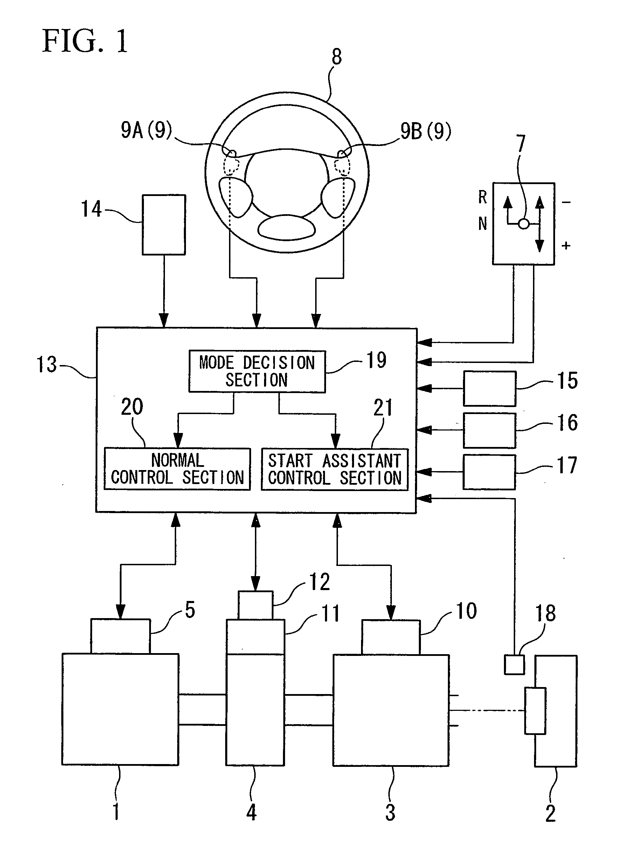

Hereinafter, one embodiment of the present invention will be described on the basis of the drawings. FIG. 1 shows a schematic structure of a start assistant system of a motor vehicle according to the present invention. A driving mechanism of a motor vehicle includes an engine 1 which is a driving source, a multistage type speed changing device 3 for shifting the power of the engine 1 to transfer it to driving wheels 2, and a clutch 4 that is disposed between the engine 1 and the speed changing device 3 and operates the connections and disconnections of the power of the engine 1 and the speed changing device 3.

The engine 1 is configured so that throttle opening degrees and engine injection amounts are controlled by means of an engine controller 5 and are basically controlled according to the amounts of an accelerator pedal is pressed downward at the time of normal driving.

The speed changing device 3 adopts a sequential way in which it is possible to perform shift to either a high gear or a low gear one stage at a time by means of the operation of either a shift lever 7 disposed transverse to a driver's seat or a paddle switch 9 disposed in a steering wheel 8. The speed changing device 3 includes a transmission actuator (not shown) for switching and operating a transmission step and is controlled by a transmission controller 10 according to the operation of the shift lever 7 or the paddle switch 8.

For example, the shift lever 7 is pushed forward from a neural position N to switch the speed changing device 3 to a reverse R, is pushed forward at a right operation position of the neutral position N to switch the speed changing device 3 to a lower gear, and is pushed rearward at the right operation position of the neutral position N to switch the speed changing device 3 to a higher gear.

The paddle switch 9 is constituted by a down side paddle 9A and an up side paddle 9B which are each installed at the left and right back sides of the steering wheel 8. The left down side paddle 9A is pushed forward with fingertips to switch the speed changing device 3 to a lower gear, and the right up side paddle 9B is pushed forward with fingertips to switch the speed changing device 3 to a higher gear. Only one of the down side paddle 9A and the up side paddle 9B is operated selectively at the time of a normal transmission operation, but both of them are simultaneously operated at a sudden start mode described later.

The clutch 4 includes a hydraulic actuator 11 for performing the connection and disconnection operations, and the hydraulic actuator 11 is controlled by a clutch controller 12.

In the present embodiment, each controller of the engine controller 5, the transmission controller 10 and the clutch controller 12 controls each of the parts based on the communication results with a combined controller 13. In the combined controller 13, transmission signal output portions of the shift lever 7 and the paddle switch 9 are connected, and at the same time, a mode conversion switch 14 for switching the driving mode by means of the operation of the driver is connected thereto. As driving mode that can be switched by the mode conversion switch 14, in addition to the normal driving mode, at least a sudden start mode (race start mode) described later is installed.
In the combined controller 13, in addition to the members described above, there are connected an accelerator opening degree sensor 15 for detecting the opening degree of the accelerator pedal, a motor vehicle speed sensor 16 for detecting the motor vehicle speed, a slope sensor 17 for detecting the slope state of the motor vehicle, and a motor vehicle wheel speed sensor 18 for detecting a motor vehicle wheel speed of driving wheels, or the like.

The combined controller 13 includes a mode decision means 19 for receiving the signals from the mode conversion switch 14 to decide the driving mode; a normal control means 20 for optimally controlling the engine 1, the clutch 4 and the speed changing device 3 when the decision result in the mode decision means 19 is a normal driving mode; and a start assistant control means 21 for controlling the engine 1, the clutch 4 and the speed changing means 3 to a state where a sudden start is possible when the decision result in the mode decision means 19 is a sudden start mode.

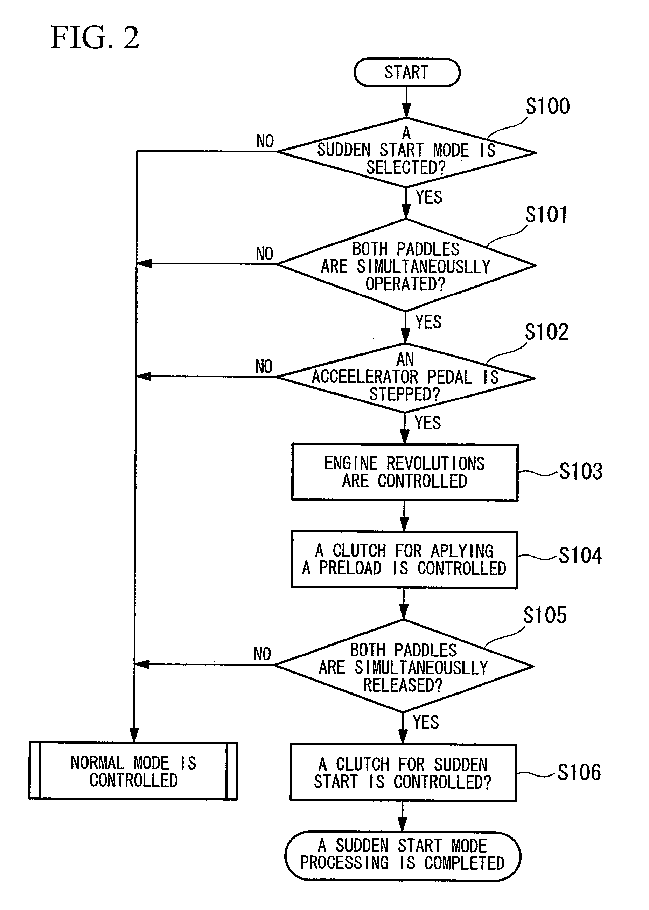

Hereinafter, based on the flowchart of FIG. 2, the description on the operation of the start assistant system will be centered on the control of the combined controller 13 at the time of the sudden start mode. The control at the time of the normal mode is a control generally performed; therefore a detailed description of the control will be omitted.

In step S100, it is decided whether or not the sudden start mode is selected with the mode conversion switch 14. If the selection is not made, a transition to the normal driving mode is performed, and if the selection is made, a progression to step S101 is performed.
In step S101, it is decided whether or not the down side paddle 9A and the up side paddle 9B are simultaneously operated for more than a set time within a regulated time. If the simultaneous operation for more than the set time within the regulated time is not performed, the sudden start mode is cancelled and a transition to the control of the normal driving mode is performed, and when the simultaneous operation for more than the set time within the regulated time is performed, progression to the next step S102 is performed.
In step S102, it is decided whether or not the accelerator pedal is stepped on for more than a set time within the regulated time. If the pedal is not stepped on for more than the set time within the regulated time, the transition to the control of the normal driving mode is performed, and if the pedal is stepped on for more than the set time within the regulated time, progression to the next step S103 is performed.
In step S103, the engine rotation is controlled to a rotational speed (NE1) at which the engine 1 is capable of generating the maximum torque at the time of starting. In step S104, the clutch 4 is controlled so that a preload with a range in which the motor vehicle does not start is applied thereto.
In the next step S105, it is decided whether or not the down side paddle 9A and the up side paddle 9B are released simultaneously within the regulated time. If both of the paddles 9A and 9B are not released simultaneously within the regulated time, the sudden start mode is cancelled and the transition to the normal driving mode is performed, and if they are released simultaneously within the regulated time, progression to step S 106 is performed.
In step S106, the clutch control for the sudden start begins, and the clutch is connected quickly, while suppressing the slipping of the driving wheel. As a result, the motor vehicle speed is steeply increased, so that a sudden start with hardly any wheel spin is possible.

After the motor vehicle starts, it is also possible that the slip state of the driving wheels 2 is fed back to perform sliding-control of the clutch 4 so as to suppress the sliding of the driving wheels 2.
In the steps prior to the step 100 or the like, it is ascertained whether the motor vehicle has stopped or whether or not the motor vehicle stops on a hill. In a case where the motor vehicle has not stopped or when the motor vehicle stops on a hill, switching to the sudden start mode may be prohibited.

As described above, in the start assistant system, the up side paddle 9B and the down side paddle 9A, which are installed in the steering wheel 8, are simultaneously operated, and after the accelerator pedal is stepped on, the sudden start of the motor vehicle is controlled based on a start instruction in which both of the paddles 9A and 9B are released. As a result, the driver can perform the driving operation at the time of the sudden starting, with both hands gripping the steering wheel 8. Thus, the driving operation at the time of the sudden starting using the start assistant system can be greatly improved.

The present invention is not limited to the embodiment described above, and various design changes can be made thereto within the scope without departing from the gist thereof. The invention is defined by appended claims only.

### Industrial Applicability

According to the start assistant system of the motor vehicle of the present invention, it is possible to promote an improvement in the driving operability as the driver can perform a start operation without having to separate their hands from the steering wheel.

## Claims

1. A start assistant system of a motor vehicle including
an up side paddle (9B) which is installed in a steering wheel (8) and shifts a speed changing device (3) of a drive transmitting mechanism to a higher gear, and
a down side paddle (9A) which is installed in the steering wheel (8) and shifts the speed changing device (3) to a lower gear,
wherein
the motor vehicle is started to move in a race start mode, based on
- a start preparation instruction in which a driver operates the up side paddle (9B) and the down side paddle (9A) simultaneously (S101) and at the same time steps on the accelerator pedal (S102), to control engine revolutions and a clutch (4) for applying a preload with a range in which the motor vehicle does not start to move (S103, S104), and
- a subsequent start instruction in which the driver releases both paddles (S105), to control the clutch (4) for a sudden start in the race start mode (S106).

2. The start assistant system of the motor vehicle according to Claim 1,
wherein
the clutch (4), which is disposed between an engine and the speed changing device (3) and operates the power connection and disconnection of the engine (1) and the speed changing device (3), is controlled depending on either throttle opening degrees or engine revolutions so as to suppress wheel spin.

3. The start assistant system of the motor vehicle according to Claim 1,
wherein
after a mode conversion switch (14) for switching a driving mode is switched to select a sudden start mode,
when the operational unit is not operated simultaneously for more than a predetermined time within a regulated time, the sudden start mode is canceled.

## Patentansprüche

1. Starthilfssystem eines Kraftfahrzeugs, umfassend:
ein Aufwärts-Paddel (9B), welches in einem Lenkrad (8) installiert ist und welches eine Geschwindigkeitsänderungsvorrichtung (3) eines Antriebsübertragungsmechanismus in einen höheren Gang umschaltet, und
ein Abwärts-Paddel (9A), welches in dem Lenkrad (8) installiert ist und welches die Geschwindigkeitsänderungsvorrichtung (3) in einen niedrigeren Gang umschaltet,
wobei das Kraftfahrzeug gestartet wird, um sich in einem Rennstartmodus zu bewegen, basierend auf:
- einer Startvorbereitungsanweisung, in welcher der Fahrer das Aufwärts-Paddel (9B) und das Abwärts-Paddel (9A) simultan betätigt (S101) und gleichzeitig auf das Gaspedal (S102) tritt, um Motorumdrehungen und eine Kupplung (4) zu regeln/steuern zum Anwenden einer Vorlast in einem Bereich, in welchem das Kraftfahrzeug nicht startet sich zu bewegen (S103, S104), und
- einer nachfolgende Startanweisung, in welcher der Fahrer beide Paddel loslässt (S105), um die Kupplung (4) für einen plötzlichen Start in dem Rennstartmodus zu regeln/steuern (S106).

2. Starthilfssystem des Kraftfahrzeugs nach Anspruch 1,
wobei die Kupplung (4), welche zwischen einem Motor und der Geschwindigkeitsänderungsvorrichtung (3) angeordnet ist und welche die Leistungsverbindung und -trennung des Motors (1) und der Geschwindigkeitsänderungsvorrichtung (3) betreibt, abhängig entweder von einem Drosselklappenöffnungsgrad oder von Motorumdrehungen geregelt/gesteuert wird, um ein Durchdrehen der Räder zu unterdrücken.

3. Starthilfssystem des Kraftfahrzeugs nach Anspruch 1,
wobei dann, wenn nachdem ein Modusumstellschalter (14) zum Umschalten eines Fahrmodus umgeschaltet wird, um einen plötzlichen Start auszuwählen, die Betriebseinheit nicht simultan für mehr als eine vorbestimmte Zeit innerhalb einer eingestellten Zeit betrieben wird, der plötzliche Startmodus abgebrochen wird.

## Revendications

1. Système auxiliaire de démarrage d'un véhicule à moteur comprenant
une manette montante (9B) qui est installée dans un volant (8) et fait passer un dispositif de changement de vitesse (3) d'un mécanisme de transmission d'entraînement à une vitesse supérieure, et
une manette descendante (9A) qui est installée dans le volant (8) et fait passer le dispositif de changement de vitesse (3) à une vitesse inférieure,
dans lequel
le véhicule à moteur est démarré pour avancer dans un mode de départ de course, d'après
- une instruction de préparation de démarrage dans laquelle un conducteur actionne la manette montante (9B) et la manette descendante (9A) simultanément (S101) et appuie en même temps sur la pédale d'accélérateur (S102) afin de commander la vitesse du moteur et un embrayage (4) destiné à appliquer une précharge avec une gamme dans laquelle le véhicule à moteur ne commence pas à avancer (S103, S104), et
- une instruction de démarrage ultérieure dans laquelle le conducteur relâche les deux manettes (S105) afin de commander l'embrayage (4) pour un démarrage brusque dans le mode de départ de course (S106).

2. Système auxiliaire de démarrage d'un véhicule à moteur selon la revendication 1, dans lequel
l'embrayage (4), qui est disposé entre un moteur et le dispositif de changement de vitesse (3) et actionne la connexion et déconnexion du moteur (1) et le dispositif de changement de vitesse (3), est commandé selon soit les degrés d'ouverture du papillon des gaz soit la vitesse du moteur de façon à supprimer le patinage des roues.

3. Système auxiliaire de démarrage du véhicule à moteur selon la revendication 1, dans lequel
après qu'un commutateur de conversion de mode (14) permettant de commuter un mode de conduite est commuté afin de sélectionner un mode de démarrage brusque,
lorsque l'unité opérationnelle n'est pas actionnée simultanément pendant une période plus longue qu'une période prédéterminée dans une période régulée, le mode de démarrage brusque est annulé.
